# EUROPEAN PATENT APPLICATION

(11) **EP 4 668 963 A1**
(43) Date of publication of application: **24.12.2025**
(21) Application number: 23921725.0
(22) Date of filing: 14.02.2023
(51) Int. Cl.: H04W 72/20

(54) **TRANSMISSION CONFIGURATION INDICATION STATE DETERMINATION METHOD AND DEVICE, TRANSMISSION CONFIGURATION INDICATION STATE CONFIGURATION METHOD AND DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/076033
(87) International publication number: WO 2024/168557

(57) **Abstract**

The present disclosure relates to a transmission configuration indication state determination method and device, a transmission configuration indication state configuration method and device, and a storage medium. The transmission configuration indication state determination method comprises: acquiring first indication information, wherein the first indication information is used for determining a first transmission configuration indication state, and the first transmission configuration indication state comprises N unified transmission configuration indication states; and acquiring second indication information, wherein the second indication information is used for determining a second transmission configuration indication state corresponding to a physical shared channel of a terminal, and the second transmission configuration indication state is one or more unified transmission configuration indication states among the N unified transmission configuration indication states; the physical shared channel comprises a physical uplink shared channel and/or a physical downlink shared channel, a physical downlink control channel of the terminal is configured to communicate on the basis of a single frequency network (SFN) scheme, and the first indication information and the second indication information are received by means of the physical downlink control channel. The method can improve the transmission flexibility of a physical shared channel based on a unified transmission configuration indication state.

## Description

### FIELD

The present disclosure relates to the field of communication technologies, and in particular relates to a method and an apparatus for determining a transmission configuration indication (TCI) state, a method and an apparatus for configuring a TCI state, and a storage medium.

### BACKGROUND

In new radio (NR) technology, for example, when a communication frequency band is in a frequency range 2, since a high-frequency channel attenuates quickly, in order to ensure coverage, it is necessary to use beam-based transmission and reception.

In the related art, a beam may be indicated by a transmission configuration indication (TCI) state or spatial relationship information (spatialrelationinfo). In the method of indicating the beam through the TCI state, the TCI state corresponding to each physical channel may be indicated based on signaling. In order to reduce signaling overhead, 3GPP introduced a unified TCI state.

In a case of multiple transmission and reception points, there are multiple physical channels, and a process for configuring the multiple physical channels is relatively complicated.

### SUMMARY

In order to overcome the problems existing in the related art, the present disclosure provides a method and an apparatus for determining a TCI state, a method and an apparatus for configuring a TCI state and a storage medium.

According to a first aspect of embodiments of the present disclosure, there is provided a method for determining a TCI state, performed by a terminal, including:
obtaining first indication information, in which the first indication information is used to determine a first TCI state, and the first TCI state includes N sets of unified TCI states, where N is a positive integer greater than 1; and
obtaining second indication information, in which the second indication information is used to determine a second TCI state corresponding to a physical shared channel of the terminal, and the second TCI state includes one or more sets of unified TCI states in the N sets of unified TCI states;
in which the physical shared channel includes a physical uplink shared channel and/or a physical downlink shared channel, a physical downlink control channel of the terminal is configured to communicate according to a single frequency network (SFN) scheme, and the first indication information and the second indication information are received via the physical downlink control channel.

According to a second aspect of embodiments of the present disclosure, there is provided a method for determining a TCI state, performed by a network device, including:
sending first indication information, in which the first indication information is used to configure a first TCI state, and the first TCI state includes N sets of unified TCI states, where N is a positive integer greater than 1; and
sending second indication information, in which the second indication information is used to configure a second TCI state corresponding to a physical shared channel of a terminal, and the second TCI state includes one or more sets of unified TCI states in the N sets of unified TCI states;
in which the physical shared channel includes a physical uplink shared channel and/or a physical downlink shared channel, a physical downlink control channel of the terminal is configured to communicate according to a single frequency network (SFN) scheme, and the first indication information and the second indication information are received via the physical downlink control channel.

According to a third aspect of embodiments of the present disclosure, there is provided an apparatus for determining a TCI state, including:
a receiving unit, configured to obtain first indication information, in which the first indication information is used to determine a first TCI state, and the first TCI state includes N sets of unified TCI states, where N is a positive integer greater than 1; and
obtain second indication information, in which the second indication information is used to determine a second TCI state corresponding to a physical shared channel of the terminal, and the second TCI state includes one or more sets of unified TCI states in the N sets of unified TCI states;
in which the physical shared channel includes a physical uplink shared channel and/or a physical downlink shared channel, a physical downlink control channel of the terminal is configured to communicate according to an SFN scheme, and the first indication information and the second indication information are received via the physical downlink control channel.

According to a fourth aspect of embodiments of the present disclosure, there is provided an apparatus for determining a TCI state, including:
a sending unit, configured to send first indication information, in which the first indication information is used to configure a first TCI state, and the first TCI state includes N sets of unified TCI states, where N is a positive integer greater than 1; and
send second indication information, in which the second indication information is used to configure a second TCI state corresponding to a physical shared channel of a terminal, and the second TCI state includes one or more sets of unified TCI states in the N sets of unified TCI states;
in which the physical shared channel includes a physical uplink shared channel and/or a physical downlink shared channel, a physical downlink control channel of the terminal is configured to communicate according to an SFN scheme, and the first indication information and the second indication information are received via the physical downlink control channel.

According to a fifth aspect of embodiments of the present disclosure, there is provided a communication system, including a terminal and a network device, in which
the terminal is configured to perform the method as described in any one of the first aspect; and
the network device is configured to perform the method as described in any one of the second aspect.

According to a sixth aspect of embodiments of the present disclosure, there is provided a device for determining a transmission configuration indication (TCI) state, including:
a processor; and
a memory for storing processor-executable instructions;
in which the processor is configured to:
   perform the method as described in any one of the first aspect.

According to a seventh aspect of embodiments of the present disclosure, there is provided a device for determining a transmission configuration indication (TCI) state, including:
a processor; and
a memory for storing processor-executable instructions;
in which the processor is configured to:
   perform the method as described in any one of the second aspect.

According to an eighth aspect of embodiments of the present disclosure, there is provided a storage medium having stored therein instructions that, when executed by a processor of a terminal, cause the terminal to perform the method as described in any one of the first aspect.

According to a ninth aspect of embodiments of the present disclosure, there is provided a storage medium having stored therein instructions that, when executed by a processor of a network device, cause the network device to perform the method as described in any one of the second aspect.

The technical solution provided in the embodiments of the present disclosure may include the following advantageous effects. In a case where the PDCCH of the terminal is configured to communicate according to the SFN scheme, the first indication information is obtained for determining the first TCI state including N sets of unified TCI states, and the second indication information is obtained for determining the unified TCI state corresponding to the physical shared channel according to the first TCI state, such that a method for indicating an association relationship between the physical shared channel and the unified TCI state in a case where the PDCCH is configured to communicate according to the SFN scheme is provided, thereby improving transmission flexibility of the physical shared channel based on the unified TCI state.

It is to be understood that both the foregoing general description and the following detailed description are illustrative and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating a wireless communication system according to an illustrative embodiment.
FIG. 2 is a flow chart illustrating a method for determining a TCI state according to an illustrative embodiment.
FIG. 3 is a schematic diagram illustrating a method for determining N sets of unified TCI states according to information received in at least one reception according to an illustrative embodiment.
FIG. 4 is a schematic diagram illustrating a method for determining N sets of unified TCI states according to information received in at least one reception according to an illustrative embodiment.
FIG. 5 is a flow chart illustrating a method for determining a TCI state according to an illustrative embodiment.
FIG. 6 is a flow chart illustrating a method for configuring a TCI state according to an illustrative embodiment.
FIG. 7 is a flow chart illustrating a method for configuring a TCI state according to an illustrative embodiment.
FIG. 8 is a block diagram illustrating an apparatus for determining a TCI state according to an illustrative embodiment.
FIG. 9 is a block diagram illustrating an apparatus for configuring a TCI state according to an illustrative embodiment.
FIG. 10 is a block diagram illustrating a communication system according to an illustrative embodiment.
FIG. 11 is a block diagram illustrating a device for determining a TCI state according to an illustrative embodiment.
FIG. 12 is a block diagram illustrating a device for configuring a TCI state according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure.

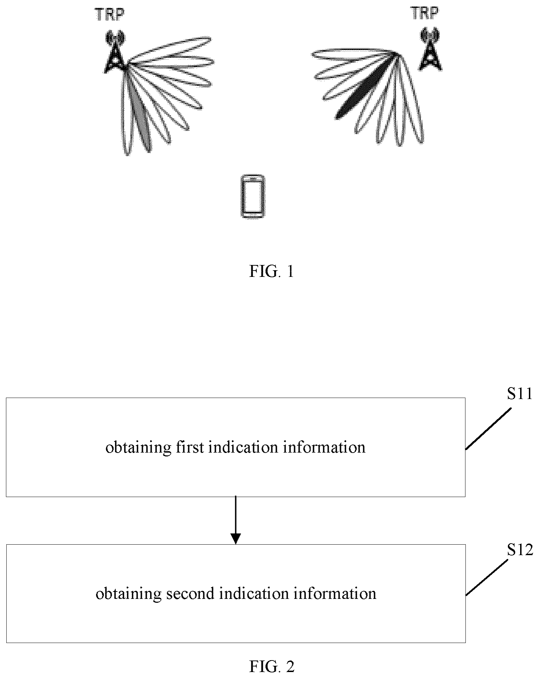

The communication method of the embodiments of the present disclosure may be applied to a wireless communication system illustrated in FIG. 1. Referring to FIG. 1, the wireless communication system includes a network device and a terminal. The terminal is connected to the network device through wireless resources and performs data transmission.

It may be understood that the wireless communication system shown in FIG. 1 is only for schematic illustration. The wireless communication system may also include other network devices, such as core network devices, wireless relay devices, and wireless backhaul devices, which are not shown in FIG 1. The number of network devices and the number of terminals included in the wireless communication system are not limited in embodiments of the present disclosure.

It may be further understood that the wireless communication system in the embodiments of the present disclosure is a network that provides wireless communication functions. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be divided into a 2nd generation (2G) network, a 3G network, a 4G network, or a future evolution network, such as a 5G network, which may also be referred to as a new radio (NR) network, according to the capacity, rate, delay, and other factors of different networks. For ease of description, a wireless communication network will be sometimes abbreviated as a network in the present disclosure.

Further, the network device involved in the present disclosure may also be referred to as a radio access network device. The radio access network device may be a base station, an evolved node B, a home base station, an access point (AP) in a wireless fidelity (Wi-Fi) system, a wireless relay node, a wireless backhaul node, a transmission point (TP), a transmission and reception point (TRP), or the like, or may also be a generation NodeB (gNB) in an NR system, or may also be a component or a part of a device that constitutes a base station, or the like. It is to be understood that the specific technology and specific device form adopted by the network device are not limited in the embodiments of the present disclosure. In the present disclosure, the network device can provide communication coverage for specific geographic areas and can communicate with terminals located within that coverage area (cell). In addition, when it comes to a vehicle to everything (V2X) communication systems, the network device may also be a vehicle-mounted device.

Further, the terminal involved in the present disclosure, which may also be referred to as a terminal device, a user equipment (UE), a mobile station (MS), a mobile terminal (MT), or the like, is a device that provides voice and/or data connectivity to a user. For example, the terminal may be a handheld device with a wireless connection function, a vehicle-mounted device, or the like. At present, some examples of the terminal are a smart phone, a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in the embodiments of the present disclosure.

In NR, especially when a communication frequency band is in a frequency range 2, since a high-frequency channel attenuates quickly, in order to ensure coverage, it is necessary to use beam-based transmission and reception.

In the related art, a unified TCI state of a physical channel configured with multiple-transmission reception point (M-TRP) transmission is supported. Further, the physical channel supports configuration as an SFN scheme. For example, a physical downlink control channel (PDCCH) supports configuration as the SFN scheme and supports indicating a corresponding beam based on single downlink control information (DCI).

Regarding the physical channel of the M-TRP transmission configured by the single DCI, how to perform indication of the unified TCI state under the configuration of the SFN scheme is still under study.

In some embodiments of the present disclosure, beams of the PDCCH, a physical downlink shared channel (PDSCH), a physical uplink control channel (PUCCH), a physical uplink shared channel (PUSCH), and/or a reference signal, etc. are all independently indicated, and the PDCCH and the PUCCH activate one beam using a media access control-control element (MAC CE), while the PDSCH and the PUSCH indicates their respective beams using DCI signaling. The reference signal includes a channel state information reference signal (CSI-RS), a sounding reference signal (SRS), a positioning reference signal (PRS), a timing reference signal (TRS), and the like. The CSI-RS includes a CSI-RS for channel state information measurement, a CSI-RS for beam measurement, or a CSI-RS for path loss estimation. The SRS includes an SRS for codebook-based or non-codebook-based channel state information measurement, an SRS for beam measurement, an SRS for antenna switching, or an SRS for positioning measurement.

In some embodiments of the present disclosure, in order to reduce signaling overhead, it is desirable to use the unified TCI state. The unified TCI state may currently be a separate indication of an uplink and a downlink, including a DL TCI state and a UL TCI state, or a joint indication of the uplink and the downlink, including a joint TCI state. That is, in a case where the base station indicates a DL TCI state for the downlink, the TCI state may be used for the PDSCH and the PDCCH of the terminal (such as a UE-specific PDCCH), and a part of the CSI-RS (such as an aperiodic CSI-RS); in a case where the base station indicates a TCI state for the uplink, the TCI state may be used for the PUSCH and the PUCCH of the terminal, and a part of the SRS. In a case where the base station indicates a joint TCI state, the TCI state may be used for both uplink and downlink channels/the reference signal.

In some embodiments of the present disclosure, only the unified TCI state of the S-TRP is considered, that is, only the indication method using one set of TCI state (including the joint TCI state, or the DL TCI state and the UL TCI state) is considered. However, it is uncertain how to indicate in a case of the M-TRP. In a case of the M-TRP, the method of the S-DCI is included. For the PDCCH, the PDSCH, the PUCCH, and the PUSCH, in a case where PXXCH is configured with the M-TRP and the other part (PYYCH) is configured with the S-TRP, when the TCI state indication information indicates two sets of TCI states, even for the PXXCH configured with M-TRP, dynamic switching between the M-TRP and the S-TRP may need to be implemented. In this case, how to determine which one or both of the two sets of TCI states each channel corresponds to requires additional signaling indication.

Currently, the PDCCH is based on an RRC signaling to determine which one or both of the two TCI states each CORESET or CORESET group uses to receive the PDCCH.

The PUCCH is also based on the RRC signaling to determine which one or both of the two TCI states each PUCCH or PUCCH group uses to send the PUCCH.

The PDSCH is based on the first indication field of the PDSCH in the DCI to determine which one or both of the two sets of TCI states each PDSCH uses to receive the PDSCH.

The PUSCH is based on the second indication field of the PUSCH in the DCI to determine which one or both of the two sets of TCI states each PUSCH uses to send the PUSCH.

In the related art, the PDCCH may be configured as the SFN scheme, for example, the SFN scheme may include the following two ways.
1. SFNschemeA: with the same frequency domain resource or the same time domain resource, and the demodulation reference signal (DMRS) ports of the same code division multiplexing (CDM) group, the same transport block (TB) is transmitted via different TCI states, and the PDSCH/PUSCH has a quasi co-location (QCL) relationship with parameters in two TCI states.
2. SFNschemeB: with the same frequency domain resource or the same time domain resource, and the DMRS ports of the same CDM group, the same TB is transmitted via different TCI states, and the PDSCH/PUSCH has a QCL relationship with parameters in two TCI states except some parameters in the second TCI state (such as {Doppler shift, Doppler spread}).

In a case where the PDCCH is configured as the SFN scheme, the configuration of the unified TCI state of different terminals will be different according to capabilities of different terminals, and the association relationship between the physical shared channel and the N sets of unified TCI states will also be different according to the N sets of unified TCI states configured.

In view of this, embodiments of the present disclosure propose a method for determining the TCI state. In a case where the PDCCH of the terminal is configured to communicate according to the SFN scheme, the first indication information is obtained for determining the first TCI state including N sets of unified TCI states, and the second indication information is obtained for determining the unified TCI state corresponding to the physical shared channel according to the first TCI state, such that a method for indicating an association relationship between the physical shared channel and the unified TCI state in a case where the PDCCH is configured to communicate according to the SFN scheme is provided, thereby improving transmission flexibility of the physical shared channel based on the unified TCI state.

FIG. 2 is a flow chart illustrating a method for determining a TCI state according to an illustrative embodiment. As shown in FIG. 2, the method is performed by a terminal and includes the following steps.

In step S11, first indication information is obtained.

The first indication information is used to determine a first TCI state, and the first TCI state includes N sets of unified TCI states, where N is a positive integer greater than 1.

In step S12, second indication information is obtained.

The second indication information is used to determine a second TCI state corresponding to a physical shared channel of the terminal, and the second TCI state includes one or more sets of unified TCI states in the N sets of unified TCI states. Further, the physical shared channel includes a physical uplink shared channel and/or a physical downlink shared channel, and a physical downlink control channel of the terminal is configured to communicate according to an SFN scheme.

In embodiments of the present disclosure, the method for determining the TCI state may be applied to a scenario where the PDCCH of the terminal is configured to perform communication according to the SFN scheme. In the scenario where the PDCCH is configured to perform the communication according to the SFN scheme, a transmission is performed on the physical shared channel according to the M-TRP scheduled by the S-DCI. Embodiments of the present disclosure are mainly directed to a solution for determining and indicating the unified TCI state of the physical shared channel. The physical shared channel may be configured to communicate according to the SFN scheme or may be configured to communicate according to a non-SFN scheme.

In embodiments of the present disclosure, the terminal may obtain the first indication information, in which the first indication information is used to determine the first TCI state, and the first TCI state includes the N sets of unified TCI states, where N is a positive integer greater than 1. Each set of unified TCI state may include a joint TCI state, or each set of unified TCI state may include at least one of a DL TCI state or a UL TCI state.

In embodiments of the present disclosure, the terminal may obtain the second indication information, in which the second indication information is used to determine the second TCI state corresponding to the physical shared channel of the terminal, and the second TCI state includes one or more sets of unified TCI states in the N sets of unified TCI states. That is, the second indication information may be used to determine which one or more of the N sets of unified TCI states included in the first TCI state the physical shared channel corresponds to. Which one or more of the N sets of unified TCI states included in the first TCI state the physical shared channel corresponds to refers to which one or more sets of unified TCI states the transmission on the physical shared channel and/or the DMRS of the physical shared channel is based on.

With the technical solution in the embodiments of the present disclosure, in a case where the PDCCH of the terminal is configured to communicate according to the SFN scheme, the first indication information is obtained for determining the first TCI state including N sets of unified TCI states, and the second indication information is obtained for determining the unified TCI state corresponding to the physical shared channel according to the first TCI state, such that a method for indicating an association relationship between the physical shared channel and the unified TCI state in a case where the PDCCH is configured to communicate according to the SFN scheme is provided, thereby improving transmission flexibility of the physical shared channel based on the unified TCI state.

In embodiments of the present disclosure, the PDCCH is configured to communicate according to the SFN scheme, which may be that the PDCCH is configured to communicate according to SFNschemeA, or the PDCCH is configured to communicate according to SFNschemeB.

Optionally, in some embodiments of the present disclosure, the second indication information may indicate one or more sets of unified TCI states in the N sets of unified TCI states as the second TCI state. In this case, the corresponding situation is that the terminal supports only the PDCCH being configured to communicate according to the SFN scheme. That is, at this time, the physical shared channel may be configured to communicate according to the non-SFN scheme.

For example, in a case where the terminal supports only the PDCCH configured to communicate according to the SFNschemeA, it is necessary to determine that the physical shared channel is configured to communicate according to the non-SFN scheme before the UE may determine one or more sets of unified TCI states in the N sets of unified TCI states as the second TCI state according to the second indication information.

For another example, in a case where the PDCCH of the terminal is configured to communicate according to the SFNschemeB, and the physical shared channel is configured to communicate also according to the SFNschemeB at this time, the UE cannot select one set of unified TCI state in the N sets of unified TCI states as the second TCI state according to the second indication information. On the other hand, in a case where the PDCCH of the terminal is configured to communicate according to the SFNschemeB, and the physical shared channel is configured to communicate according to the non-SFN scheme at this time, the UE may select one or more sets of unified TCI states in the N sets of unified TCI states as the second TCI state according to the second indication information.

In a case where the terminal supports only the PDCCH being configured to communicate according to the SFN scheme, the PDSCH of the terminal may also be configured to communicate according to the same SFN scheme as the PDCCH. In this case, the second indication information of the terminal may only indicate multiple sets of unified TCI states in the N sets of unified TCI states as the second TCI state of the physical shared channel. In this case, the terminal does not expect the second indication information to indicate one set of unified TCI state in the N sets of unified TCI states as the second TCI state.

Alternatively, the terminal expects the second indication information to indicate the multiple sets of unified TCI states in the N sets of unified TCI states as the second TCI state. It may also be understood that in a case where the second indication information indicates one set of unified TCI state in the N sets of unified TCI states as the second TCI state, the terminal may abandon the transmission on the physical shared channel.

In embodiments of the present disclosure, the second indication information may further be used to indicate only the multiple sets of unified TCI states in the N sets of unified TCI states as the second TCI state. In this case, the corresponding situation may be that the terminal does not support only PDCCH being configured to communicate according to the SFN scheme, that is, in this case, the physical shared channel must be configured to communicate according to the same SFN scheme as the PDCCH.

In an example, in a case where the terminal does not support that only the PDCCH is configured to communicate according to the SFNschemeA, the physical shared channel is configured as the SFNschemeA.

In an example, in a case where the terminal does not support that only the PDCCH is configured to communicate according to the SFNschemeB, the physical shared channel is configured to communicate according to the SFNschemeB. In this case, multiple sets of unified TCI states in the N sets of unified TCI states may be used as the second TCI state, as indicated by the second indication information. That is, at this time, the terminal does not expect the second indication information to indicate one set of unified TCI state in the N sets of unified TCI states as the second TCI state. Alternatively, the terminal expects the second indication information to indicate the multiple sets of unified TCI states in the N sets of unified TCI states as the second TCI state. It may also be understood that in a case where the second indication information indicates one set of unified TCI state in the N sets of unified TCI states as the second TCI state, the terminal may abandon the transmission on the physical shared channel.

In embodiments of the present disclosure, the first indication information received by the terminal may include information received in L receptions, and information received in the i^{th} reception indicates Kᵢ sets of unified TCI states, where L is a positive integer, and i is a positive integer less than or equal to L.

In an example, the first indication information received by the terminal may include the information received in L receptions, and the information received in the i^{th} reception indicates Kᵢ sets of unified TCI states. Depending on a value of i, a value of Kᵢ may be different or the same. For example, in a case where K₁ is 1, information received in the first reception corresponds to one set of unified TCI state. In this case, K₂ may be 1, 2, or other values. That is, information received in the second reception may correspond to one set of unified TCI state, or two sets of unified TCI states, or multiple sets of unified TCI states, and so on.

In the above example, optionally, the information received in L receptions may come from H transmission points respectively, where H is a positive integer less than or equal to L.

In this case, the N sets of unified TCI states included in the first TCI state may be determined: according to Kᵢ sets of unified TCI states; or according to Kᵢ sets of unified TCI states and Kⱼ sets of unified TCI states, where j is a positive integer less than or equal to L, and i is not equal to j.

In embodiments of the present disclosure, in a case where the N sets of unified TCI states are determined according to the Kᵢ sets of unified TCI states, i may be equal to L. That is, the Kᵢ sets of unified TCI states are determined according to the information received in the L^{th} reception, and the information received in the L^{th} reception is information received most recently, and then the N sets of unified TCI states are determined according to the Kᵢ sets of unified TCI states. Still taking the above example that the terminal receives the information in L receptions, the N sets of unified TCI states may be determined according to K_{L} sets of unified TCI states indicated by the information received in the L^{th} reception, where i=L. Kᵢ may be a maximum value among K₁, K₂, ..., K_{L}, or may not be a maximum value among K₁, K₂, ..., K_{L}. Further, in a case where K_{L}=1, K_{L-1} sets of unified TCI states indicated by information received in the L-1^{th} reception are determined as the N sets of unified TCI states, until the obtained value of K_{L-p} is greater than 1, where p is 0 or a positive integer less than L.

In embodiments of the present disclosure, in a case where the N sets of unified TCI states are determined according to the Kᵢ sets of unified TCI states and the Kⱼ sets of unified TCI states, i may be equal to L. That is, the Kᵢ sets of unified TCI states are determined according to the information received in the L^{th} reception, and the information received in the L^{th} reception is information received most recently. Further, j may be less than i, the Kⱼ sets of unified TCI states are determined according to information received in the j^{th} reception, the information received in the j^{th} reception is information received before the information received in the i^{th} reception, and at least one set of unified TCI state in the Kⱼ sets of unified TCI states is not updated by the information received in the L^{th} reception.

Still taking the above example that the terminal receives the information in L receptions, in a case where the information received by the terminal in the j^{th} reception indicates the Kⱼ sets of unified TCI states, and the information received by the terminal in the L^{th} reception indicates the Kⱼ sets of unified TCI states, in which the Kⱼ sets of unified TCI states does not include update of at least one set of unified TCI state in the Kⱼ sets of unified TCI states, then the N sets of unified TCI states may be determined according to the Kⱼ sets of unified TCI states and the Kᵢ sets of unified TCI states. For example, information received by the terminal in the Kⱼ^{th} reception indicates two sets of unified TCI states, including the first set and the second set, and the information received by the terminal most recently, i.e., the information received in the K_{L}^{th} reception, indicates one set of unified TCI state, and this one set of unified TCI state updates the first set of unified TCI state indicated in the information received in the Kⱼ^{th} reception, and does not update the second set of unified TCI state indicated in the information received in the Kⱼ^{th} reception. In this case, the N sets of unified TCI states may be determined according to the first set of unified TCI state updated in the information received in the K_{L}^{th} reception and the second set of unified TCI state in the information received in the Kⱼ^{th} reception, where N=2.

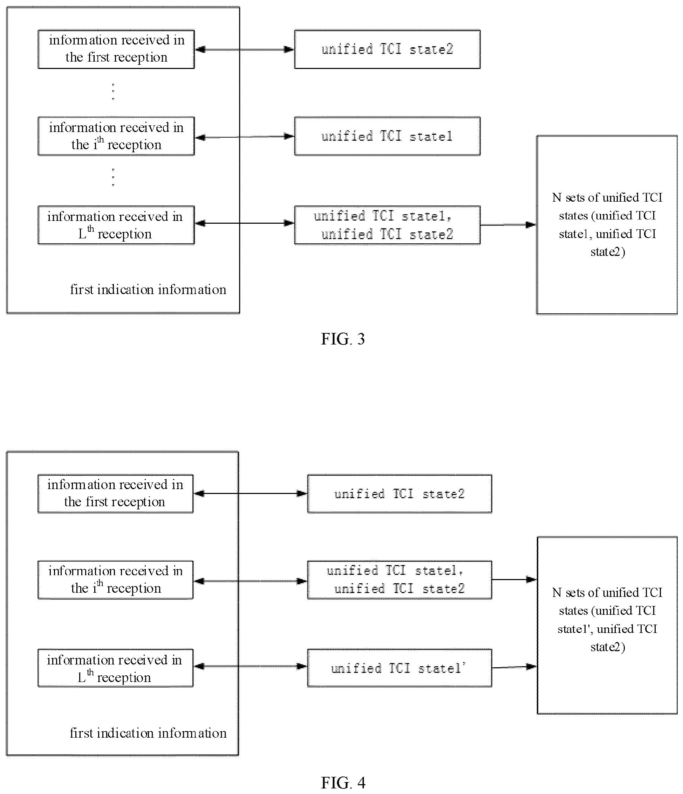

FIG. 3 is a schematic diagram illustrating a method for determining N sets of unified TCI states according to information received in at least one reception according to an illustrative embodiment. As shown in FIG. 3, the terminal receives information in L receptions as first indication information, in which the information received in the L^{th} reception is information received most recently in the first indication information, and the information received in the L^{th} reception indicates two sets of unified TCI states, namely a unified TCI state1 and a unified TCI state2. In this case, it may be directly determined that the two sets of unified TCI states indicated by the information received in the L^{th} reception, namely the unified TCI state1 and the unified TCI state2, are the N sets of unified TCI states.

FIG. 4 is a schematic diagram illustrating a method for determining N sets of unified TCI states according to information received in at least one reception according to an illustrative embodiment. As shown in FIG. 4, the terminal receives information in L receptions as first indication information, in which the information received in the L^{th} reception is information received most recently in the first indication information, the information received in the i^{th} reception is information received before the information received in the L^{th} reception, the information received in the i^{th} reception indicates two sets of unified TCI states, namely a unified TCI state1 and a unified TCI state2, and the information received in the L^{th} reception indicates one set of unified TCI state, namely a unified TCI state1', in which the unified TCI state1' is an update of the unified TCI state1 indicated by the information received in the i^{th} reception. In this case, the unified TCI state1' and the unified TCI state2 may be determined as the N sets of unified TCI states.

By adopting the technical solution of embodiments of the present disclosure, the first TCI state including the N sets of unified TCI states is determined by first indication information including at least one received information, and a method for configuring a unified TCI state is provided in a case where a PDCCH of a terminal is configured to communicate according to an SFN scheme, thereby improving the transmission flexibility of the PDCCH based on the unified TCI state. Further, the efficiency for configuring a shared channel by a UE is improved.

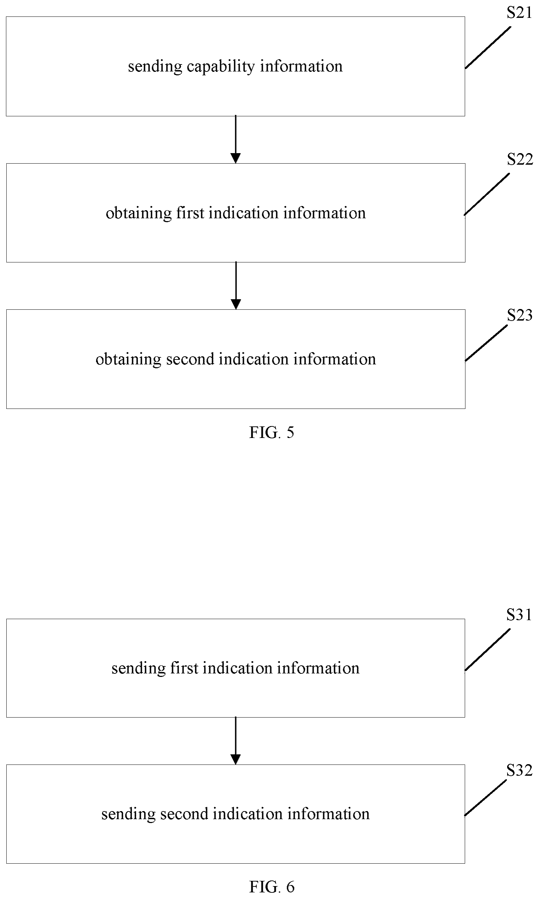

FIG. 5 is a flow chart illustrating a method for determining a TCI state according to an illustrative embodiment. As shown in FIG. 5, the method includes the following steps.

In step S21, capability information is sent.

In step S22, first indication information is obtained.

The first indication information is the same as the first indication information in the above embodiments, and the details may refer to the relevant description of the above embodiments.

In step S23, second indication information is obtained.

The second indication information is the same as the second indication information in the above embodiments, and details may refer to the relevant description of the above embodiments. Further, a physical shared channel includes a physical uplink shared channel and/or a physical downlink shared channel, and a PDCCH of a terminal is configured to communicate according to an SFN scheme.

In embodiments of the present disclosure, the terminal may send the capability information to a network device before obtaining the first indication information. The capability information may indicate that the terminal supports that only the PDCCH is configured to communicate according to the SFN scheme; or the capability information indicates that the terminal does not support that only the PDCCH is configured to communicate according to the SFN scheme.

In embodiments of the present disclosure, at least one control resource set (CORESET) of the terminal may be configured to be associated with multiple sets of unified TCI states in N sets of unified TCI states. That is, the PDCCH in the CORESET is configured to receive according to the multiple sets of unified TCI states. The CORESET may be a CORESET used to transmit the PDCCH.

In embodiments of the present disclosure, the first indication information may be carried in a media access control-control element (MAC CE), or the first indication information may be carried in downlink control information (DCI) and an MAC CE.

In a case where the first indication information is carried in the DCI and the MAC CE, the MAC CE is used to activate multiple code points of a TCI state field of the DCI to be in a one-to-one correspondence with K sets of unified TCI states, and the TCI state field of the DCI indicates one code point among the multiple code points. Among the multiple code points in the TCI state field of the DCI activated by the MAC CE, at least one code point corresponds to multiple sets of unified TCI states. That is, among the K sets of unified TCI states corresponding to the at least one code point, K is a positive integer greater than 1.

In a case where the first indication information is carried in the MAC CE, the MAC CE is used to activate the K sets of unified TCI states, and the K sets of unified TCI states correspond to a first code point in a TCI indication field of the DCI. That is, at this time, the MAC CE only activates one code point, i.e., the first code point, of the TCI state field of the DCI. Therefore, the N sets of unified TCI states may be determined according to the K sets of unified TCI states corresponding to the first code point.

In an implementation of the present disclosure, there are one or more physical shared channels. Furthermore, the number of physical shared channels may be understood as a number of occasions of physical channels. Multiple physical shared channels may perform transmission according to time division multiplexing (TDM), frequency division multiplexing (FDM), space division multiplexing (SDM) (two CDM DMRS port groups), and the SFN scheme. The multiple physical shared channels may transmit one or more identical or different TBs. In a case where there are two physical shared channels and the transmission is based on the FDM, SDM and TDM schemes, a mapping relationship between the physical shared channels and two sets of unified TCI states may be configured in a one-to-one mapping manner. In a case where the number of physical shared channels is greater than 2, for example, 4, and the transmission is based on the TDM scheme, the first and third physical shared channels may be configured to correspond to the first set of unified TCI state, and the second and fourth physical shared channels may be configured to correspond to the second set of unified TCI state; or the first and second physical shared channels may be configured to correspond to the first set of unified TCI state, and the third and fourth physical shared channels may be configured to correspond to the second set of unified TCI state. In a case where the number of physical shared channels is greater than 2, for example, 8, and the transmission is based on the TDM scheme, the first, third, fifth and seventh physical shared channels may be configured to correspond to the first set of unified TCI state, and the second, fourth, sixth and eighth physical shared channels may be configured to correspond to the second set of unified TCI state; or the first, second, fifth and sixth physical shared channels may be configured to correspond to the first set of unified TCI state, and the third, fourth, seventh and eighth physical shared channels may be configured to correspond to the second set of unified TCI state, and so on.

Optionally, in some embodiments of the present disclosure, the N sets of unified TCI states may correspond one-to-one to multiple TRPs, that is, one set of unified TCI state in the N sets of unified TCI states may correspond to one TRP in the multiple TRPs.

Optionally, in some embodiments of the present disclosure, the N sets of unified TCI states may not correspond one-to-one to the multiple TRPs, that is, one set of unified TCI state in the N sets of unified TCI states may correspond to multiple TRPs.

FIG. 6 is a flow chart illustrating a method for configuring a TCI state according to an illustrative embodiment. As shown in FIG. 6, the method is performed by a network device and includes the following steps.

In step S31, first indication information is sent.

The first indication information is the same as the first indication information in the above embodiment, and the details may refer to the relevant description of the above embodiment.

In step S32, second indication information is sent.

The second indication information is the same as the second indication information in the above embodiment, and details may refer to the relevant description of the above embodiment. Further, Further, a physical shared channel includes a physical uplink shared channel and/or a physical downlink shared channel, and a PDCCH of a terminal is configured to communicate according to an SFN scheme.

In embodiments of the present disclosure, the method for configuring the TCI state may be applied to configuration and indication of unified TCI state(s) of the physical shared channel(s) in a case where the PDCCH of the terminal is configured to communicate according to the SFN scheme and perform transmission based on M-TRP scheduled by the S-DCI. In this case, the physical shared channel may be configured to communicate according to the SFN scheme or may be configured to communicate according to a non-SFN scheme.

In embodiments of the present disclosure, the network device may send the first indication information, in which the first indication information is used to configure a first TCI state, and the first TCI state includes N sets of unified TCI states, where N is a positive integer greater than 1. Each set of unified TCI state may include a joint TCI state, or each set of unified TCI state may include at least one of a DL TCI state or a UL TCI state.

In embodiments of the present disclosure, the network device may further send the second indication information, in which the second indication information is used to configure a second TCI state corresponding to the physical shared channel of the terminal, and the second TCI state includes one or more sets of unified TCI states in the N sets of unified TCI states. That is, the second indication information may be used to configure which one or more of the N sets of unified TCI states included in the first TCI state the physical shared channel corresponds to. Which one or more of the N sets of unified TCI states included in the first TCI state the physical shared channel corresponds to refers to which one or more sets of unified TCI states the transmission on the physical shared channel and/or the DMRS of the physical shared channel is based on.

With the technical solution in the embodiments of the present disclosure, in a case where the PDCCH of the terminal is configured to communicate according to the SFN scheme, the first indication information and the second indication information are sent, in which the first indication information is used to configure the first TCI state including the N sets of unified TCI states, and the second indication information is used to configure the unified TCI state corresponding to the physical shared channel according to the first TCI state, such that a method for indicating an association relationship between the physical shared channel and the unified TCI state in a case where the PDCCH is configured to communicate according to the SFN scheme is provided, thereby improving transmission flexibility of the physical shared channel based on the unified TCI state.

In embodiments of the present disclosure, the PDCCH is configured to communicate according to the SFN scheme, which may be that the PDCCH is configured to communicate according to SFNschemeA, or the PDCCH is configured to communicate according to SFNschemeB.

In embodiments of the present disclosure, the second indication information may be used to configure one or more sets of unified TCI states in the N sets of unified TCI states as the second TCI state. In this case, the corresponding situation is that the terminal supports only the PDCCH being configured to communicate according to the SFN scheme. That is, at this time the physical shared channel may be configured to communicate according to the non-SFN scheme. It should be noted that, in a case where the terminal supports that only the PDCCH is configured to communicate according to the SFN scheme, the PDSCH of the terminal may also be configured to communicate according to the same SFN scheme as the PDCCH. In this case, the second indication information of the terminal may only indicate multiple sets of unified TCI states in the N sets of unified TCI states as the second TCI state. That is, in this case, the terminal does not expect the second indication information to indicate one set of unified TCI state in the N sets of unified TCI states as the second TCI state. Alternatively, the terminal expects the second indication information to indicate multiple sets of unified TCI states in the N sets of unified TCI states as the second TCI state. It may also be understood that in a case where the second indication information indicates one set of unified TCI state in the N sets of unified TCI states as the second TCI state, the terminal may abandon the transmission on the physical shared channel.

In embodiments of the present disclosure, the second indication information may further be used to configure only multiple sets of unified TCI states in the N sets of unified TCI states as the second TCI state. In this case, the corresponding situation may be that the terminal does not support only PDCCH being configured to communicate according to the SFN scheme, that is, the physical shared channel must be configured to communicate according to the same SFN scheme as the PDCCH. That is, in this case, the terminal does not expect the second indication information to indicate one set of unified TCI state in the N sets of unified TCI states as the second TCI state. Alternatively, the terminal expects the second indication information to indicate multiple sets of unified TCI states in the N sets of unified TCI states as the second TCI state. It may also be understood that in a case where the second indication information indicates one set of unified TCI state in the N sets of unified TCI states as the second TCI state, the terminal may abandon the transmission on the physical shared channel.

In embodiments of the present disclosure, the first indication information sent by the network device may include information sent in L sendings, and information sent in the i^{th} sending indicates Kᵢ sets of unified TCI states. Depending on a value of i, a value of Kᵢ may be different or the same. For example, in a case where K₁ is 1, information sent in the first sending corresponds to one set of unified TCI state. In this case, K₂ may be 1, 2, or other values. That is, information sent in the second sending may correspond to one set of unified TCI state, or two sets of unified TCI states, or more sets of unified TCI states, and so on.

In the above example, optionally, the information sent in the L sendings may come from H transmission points respectively, where H is a positive integer less than or equal to L.

In this case, the N sets of unified TCI states included in the first TCI state may be determined: according to Kᵢ sets of unified TCI states; or according to Kᵢ sets of unified TCI states and Kⱼ sets of unified TCI states, where j is a positive integer less than or equal to L, and i is not equal to j.

In embodiments of the present disclosure, in a case where the N sets of unified TCI states are determined according to the Kᵢ sets of unified TCI states, i may be equal to L. That is, the Kᵢ sets of unified TCI states are determined according to the information sent in the L^{th} sending, and the information sent in the L^{th} sending is information sent most recently, and then the N sets of unified TCI states are determined according to the Kᵢ sets of unified TCI states.

In embodiments of the present disclosure, in a case where the N sets of unified TCI states are determined according to the Kᵢ sets of unified TCI states and the Kⱼ sets of unified TCI states, i may be equal to L. That is, the Kᵢ sets of unified TCI states are determined according to the information sent in the L^{th} sending, and the information sent in the L^{th} sending is information sent most recently. Further, j may be less than i, the Kⱼ sets of unified TCI states are determined according to information sent in the j^{th} sending, the information sent in the j^{th} sending is information sent before the information sent in the i^{th} sending, and at least one set of unified TCI state in the Kⱼ sets of unified TCI states is not updated by the information sent in the L^{th} sending.

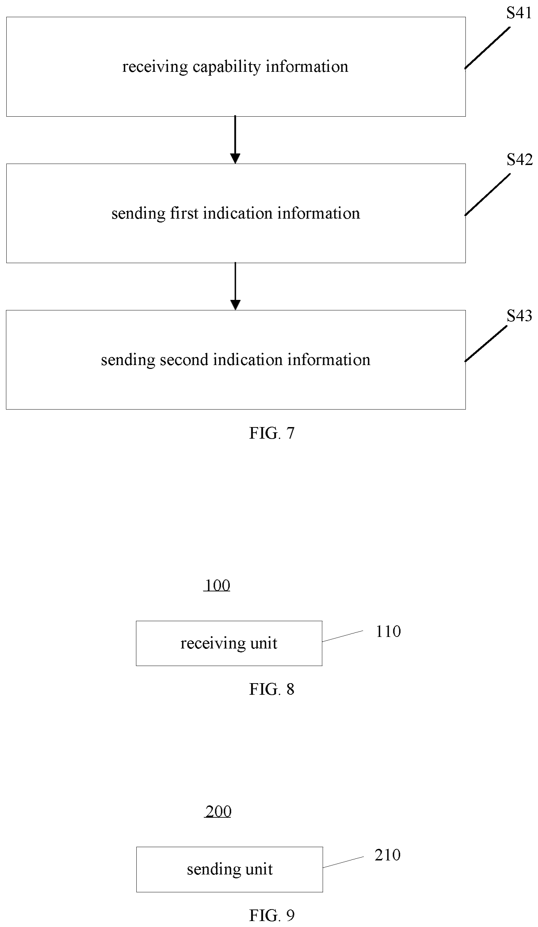

FIG. 7 is a flow chart illustrating a method for configuring a TCI state according to an illustrative embodiment. As shown in FIG. 7, the method includes the following steps.

In step S41, capability information is received.

In step S42, first indication information is obtained.

The first indication information is the same as the first indication information in the above embodiments, and the details may refer to the relevant description of the above embodiments.

In step S43, second indication information is obtained.

The second indication information is the same as the second indication information in the above embodiments, and details may refer to the relevant description of the above embodiments. Further, a physical shared channel includes a physical uplink shared channel and/or a physical downlink shared channel, and a PDCCH of a terminal is configured to communicate according to an SFN scheme.

In embodiments of the present disclosure, a network device may receive the capability information sent by the terminal before sending the first indication information. The capability information indicates that the terminal supports that only the physical downlink control channel is configured to communicate according to the SFN scheme; or the capability information indicates that the terminal does not support that only the physical downlink control channel is configured to communicate according to the SFN scheme.

In embodiments of the present disclosure, at least one CORESET of the terminal may be configured to be associated with multiple sets of unified TCI states in N sets of unified TCI states. That is, the PDCCH in the CORESET is received based on multiple sets of unified TCI states. The CORESET may be a CORESET used to transmit the PDCCH.

In embodiments of the present disclosure, the first indication information may be carried in an MAC CE, or the first indication information may be carried in DCI and an MAC CE.

In a case where the first indication information is carried in the DCI and the MAC CE, the MAC CE is used to activate multiple code points of a TCI state field of the DCI to be in a one-to-one correspondence with K sets of unified TCI states, and the TCI state field of the DCI indicates one code point among the multiple code points. Among the multiple code points in the TCI state field of the DCI activated by the MAC CE, at least one code point corresponds to multiple sets of unified TCI states. That is, among the K sets of unified TCI states corresponding to the at least one code point, K is a positive integer greater than 1.

In a case where the first indication information is carried in the MAC CE, the MAC CE is used to activate the K sets of unified TCI states, and the K sets of unified TCI states correspond to a first code point in a TCI indication field of the DCI. That is, at this time, the MAC CE only activates one code point, i.e., the first code point, of the TCI state field of the DCI. Therefore, the N sets of unified TCI states may be determined according to the K sets of unified TCI states corresponding to the first code point.

In an implementation of the present disclosure, there are one or more physical shared channels. Furthermore, the number of physical shared channels may be understood as a number of occasions of physical channels. Multiple physical shared channels may perform a transmission according to time division multiplexing (TDM), frequency division multiplexing (FDM), space division multiplexing (SDM) (two CDM DMRS port groups), and the SFN scheme. The multiple physical shared channels may transmit one or more identical or different TBs. In a case where there are two physical shared channels and the transmission is based on the FDM, SDM and TDM schemes, a mapping relationship between the physical shared channels and two sets of unified TCI states may be configured in a one-to-one mapping manner. In a case where the number of physical shared channels is greater than 2, for example, 4, and the transmission is based on the TDM scheme, the first and third physical shared channels may be configured to correspond to the first set of unified TCI state, and the second and fourth physical shared channels may be configured to correspond to the second set of unified TCI state; or the first and second physical shared channels may be configured to correspond to the first set of unified TCI state, and the third and fourth physical shared channels may be configured to correspond to the second set of unified TCI state. In a case where the number of physical shared channels is greater than 2, for example, 8, and the transmission is based on the TDM scheme, the first, third, fifth and seventh physical shared channels may be configured to correspond to the first set of unified TCI state, and the second, fourth, sixth and eighth physical shared channels may be configured to correspond to the second set of unified TCI state; or the first, second, fifth and sixth physical shared channels may be configured to correspond to the first set of unified TCI state, and the third, fourth, seventh and eighth physical shared channels may be configured to correspond to the second set of unified TCI state, and so on.

In some embodiments of the present disclosure, the N sets of unified TCI states may correspond one-to-one to multiple TRPs, that is, one set of unified TCI state in the N sets of unified TCI states may correspond to one TRP in the multiple TRPs.

It may be understood that the technical implementation involved in a process for configuring the TCI state performed by the network device in embodiments of the present disclosure may be applied to a process for determining the TCI state performed by the terminal in embodiments of the present disclosure. Therefore, regarding some technical implementations of the process for configuring the TCI state performed by the network device that are not described in detail, please refer to the relevant description of the process for determining the TCI state performed by the terminal, which is not repeated in the present disclosure.

It may be understood that the method for determining/configuring the TCI state provided in embodiments of the present disclosure is applicable to the process for determining or configuring the TCI state during an interaction process between the terminal and the network device. Regarding a process of an interaction between the terminal and the network device to realize determination/configuration of the TCI state, which is not repeated in the present disclosure.

It should be noted that those skilled in the art will appreciate that the various implementations/examples in above embodiments of the present disclosure may be used in conjunction with the foregoing embodiments or may be used independently. The principles of the various implementations/examples are similar, whether used alone or in conjunction with the foregoing embodiments. In an implementation of the present disclosure, some embodiments are described as embodiments that are used together. Certainly, it will be understood by those skilled in the art that such illustrations are not intended to limit the embodiments of the present disclosure.

Based on the same concept, embodiments of the present disclosure also provide an apparatus for determining a TCI state.

It may be understood that, the apparatus for determining the TCI state provided by the embodiments of the present disclosure includes corresponding hardware structures and/or software modules for performing various functions in order to implement the above-mentioned functions. The embodiments of the present disclosure may be implemented in a form of hardware or a combination of hardware and computer software in combination with units and algorithm steps of each example disclosed in the embodiments of the present disclosure. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of the embodiments of the present disclosure.

FIG. 8 is a block diagram illustrating an apparatus for determining a TCI state according to an illustrative embodiment. Referring to FIG. 8, the apparatus 100 includes a receiving unit 110.

The receiving unit 110 is configured to obtain first indication information, in which the first indication information is used to determine a first TCI state, and the first TCI state includes N sets of unified TCI states, where N is a positive integer greater than 1.

The receiving unit 110 is further configured to obtain second indication information, in which the second indication information is used to determine a second TCI state corresponding to a physical shared channel of the terminal, and the second TCI state includes one or more sets of unified TCI states in the N sets of unified TCI states.

The physical shared channel includes a physical uplink shared channel and/or a physical downlink shared channel, a physical downlink control channel of the terminal is configured to communicate according to an SFN scheme, and the first indication information and the second indication information are received via the physical downlink control channel.

In embodiments of the present disclosure, the physical shared channel is configured to communicate according to a non-SFN scheme; the SFN scheme configured for the physical downlink control channel is a first SFN scheme (SFNschemeA), and/or the SFN scheme configured for the physical downlink control channel is a second SFN scheme (SFNschemeB); and the second indication information indicates one or more sets of unified TCI states in the N sets of unified TCI states as the second TCI state.

In embodiments of the present disclosure, the second indication information indicates multiple sets of unified TCI states in the N sets of unified TCI states as the second TCI state.

In embodiments of the present disclosure, the physical shared channel is configured with a same SFN scheme as the physical downlink control channel.

In embodiments of the present disclosure, the SFN scheme configured for the physical downlink control channel is the first SFN scheme (SFNschemeA) or the second SFN scheme (SFNschemeB).

In embodiments of the present disclosure, the first indication information sent includes information sent in L sendings, and information sent in the i^{th} sending indicates Kᵢ sets of unified TCI states, where L is a positive integer, and i is a positive integer less than or equal to L; the N sets of unified TCI states are determined according to the Kᵢ sets of unified TCI states; or the N sets of unified TCI states are determined according to the Kᵢ sets of unified TCI states and Kⱼ sets of unified TCI states, where j is a positive integer less than or equal to L, and i is not equal to j.

In embodiments of the present disclosure, determining the N sets of unified TCI states according to the Kᵢ sets of unified TCI states includes: determining the Kᵢ sets of unified TCI states according to the information sent in the L^{th} sending, in which i=L, and the information sent in the L^{th} sending is information sent most recently.

In embodiments of the present disclosure, determining the N sets of unified TCI states according to the Kᵢ sets of unified TCI states and the Kⱼ sets of unified TCI states includes: determining the Kᵢ sets of unified TCI states according to the information sent in the L^{th} sending, where i=L; and determining the Kⱼ sets of unified TCI states according to information sent in the j^{th} sending, in which j is less than i, and at least one set of unified TCI state in the Kⱼ sets of unified TCI states is not updated by the information sent in the L^{th} sending.

In embodiments of the present disclosure, the method further includes: sending capability information before obtaining the first indication information; in which the capability information indicates that the terminal supports that only the physical downlink control channel is configured to communicate according to the SFN scheme, and the physical shared channel is configured with a non SFN scheme; or the capability information indicates that the terminal does not support that only the physical downlink control channel is configured to communicate according to the SFN scheme.

In embodiments of the present disclosure, at least one CORESET of the terminal is configured to be associated with multiple sets of unified TCI states in the N sets of unified TCI states.

In embodiments of the present disclosure, the first indication information is carried in an MAC CE, and/or carried in DCI.

In embodiments of the present disclosure, the first indication information is carried in the MAC CE, the MAC CE is used to activate K sets of unified TCI states, and the K sets of unified TCI states correspond to a first code point in a TCI indication field of the DCI.

In embodiments of the present disclosure, the first indication information is carried in the MAC CE and the DCI, the MAC CE is used to activate multiple code points in a TCI state field of the DCI to be in a one-to-one correspondence with K sets of unified TCI states, and the TCI state field of the DCI indicates one code point among the multiple code points.

In embodiments of the present disclosure, at least one code point in the multiple code points corresponds to multiple sets of unified TCI states.

In embodiments of the present disclosure, there are a plurality of physical shared channels.

In embodiments of the present disclosure, the N sets of unified TCI states correspond to multiple transmission and reception points.

FIG. 9 is a block diagram illustrating an apparatus for configuring a TCI state according to an illustrative embodiment. Referring to FIG. 9, the apparatus 200 includes a sending unit 210.

The sending unit 210 is configured to send first indication information, in which the first indication information is used to configure a first TCI state, and the first TCI state includes N sets of unified TCI states, where N is a positive integer greater than 1.

The sending unit 210 is further configured to send second indication information, in which the second indication information is used to configure a second TCI state corresponding to a physical shared channel of a terminal, and the second TCI state includes one or more sets of unified TCI states in the N sets of unified TCI states.

The physical shared channel includes a physical uplink shared channel and/or a physical downlink shared channel, a physical downlink control channel of the terminal is configured to communicate according to an SFN scheme, and the first indication information and the second indication information are received via the physical downlink control channel.

In embodiments of the present disclosure, the physical shared channel is configured to communicate according to a non-SFN scheme; the SFN scheme configured for the physical downlink control channel is a first SFN scheme (SFNschemeA), and/or the SFN scheme configured for the physical downlink control channel is a second SFN scheme (SFNschemeB); and the second indication information is used to configure one or more sets of unified TCI states in the N sets of unified TCI states as the second TCI state..

In embodiments of the present disclosure, the second indication information is used to configure multiple sets of unified TCI states in the N sets of unified TCI states as the second TCI state.

In embodiments of the present disclosure, the physical shared channel is configured with a same SFN scheme as the physical downlink control channel.

In embodiments of the present disclosure, the SFN scheme configured for the physical downlink control channel is the first SFN scheme (SFNschemeA) or the second SFN scheme (SFNschemeB).

In embodiments of the present disclosure, the first indication information includes information sent in L sendings, and information sent in the i^{th} sending indicate Kᵢ sets of unified TCI states, where L is a positive integer, and i is a positive integer less than or equal to L; the N sets of unified TCI states are determined according to the Kᵢ sets of unified TCI states; or the N sets of unified TCI states are determined according to the Kᵢ sets of unified TCI states and Kⱼ sets of unified TCI states, where j is a positive integer less than or equal to L, and i is not equal to j.

In embodiments of the present disclosure, determining the N sets of unified TCI states according to the Kᵢ sets of unified TCI states includes: determining the Kᵢ sets of unified TCI states according to the information sent in the L^{th} sending, in which i=L, and the information sent in the L^{th} sending is information sent most recently.

In embodiments of the present disclosure, determining the N sets of unified TCI states according to the Kᵢ sets of unified TCI states and the Kⱼ sets of unified TCI states includes: determining the Kᵢ sets of unified TCI states according to the information sent in the L^{th} sending, where i=L; and determining the Kⱼ sets of unified TCI states according to information sent in the j^{th} sending, in which at least one set of unified TCI state in the Kⱼ sets of unified TCI states is not updated by the information sent in the L^{th} sending.

In embodiments of the present disclosure, the method further includes: receiving capability information before sending the first indication information; in which the capability information indicates that the terminal supports that only the physical downlink control channel is configured to communicate according to the SFN scheme; or the capability information indicates that the terminal does not support that only the physical downlink control channel is configured to communicate according to the SFN scheme.

In embodiments of the present disclosure, at least one CORESET of the terminal is configured to be associated with multiple sets of unified TCI states in the N sets of unified TCI states.

In embodiments of the present disclosure, the first indication information is carried in an MAC CE, and/or carried in DCI.

In embodiments of the present disclosure, the first indication information is carried in the MAC CE, the MAC CE is used to activate K sets of unified TCI states, and the K sets of unified TCI states correspond to a first code point in a TCI indication field of the DCI.

In embodiments of the present disclosure, the first indication information is carried in the MAC CE and the DCI, the MAC CE is used to activate multiple code points of a TCI state field of the DCI to be in a one-to-one correspondence with K sets of unified TCI states, and the TCI state field of the DCI indicates one code point among the multiple code points.

In embodiments of the present disclosure, each of at least one code point in the multiple code points corresponds to multiple sets of unified TCI states.

In embodiments of the present disclosure, there are a plurality of physical shared channels.

In embodiments of the present disclosure, the N sets of unified TCI states correspond to multiple transmission and reception points.

With respect to the apparatus in the above embodiments, the specific manners for performing operations for individual modules therein have been described in detail in the embodiments regarding the method, which will not be elaborated herein.

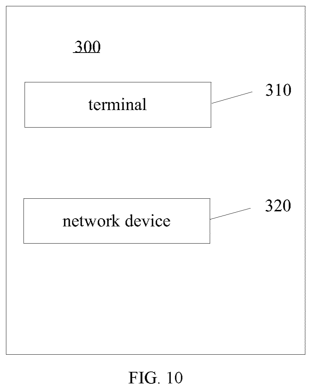

FIG. 10 is a block diagram illustrating a communication system according to an illustrative embodiment. Referring to FIG. 10, the communication system 300 includes a terminal 310 and a network device 320.

The terminal is configured to execute any one of the methods for determining the TCI state provided by embodiments of the present disclosure, and the network device is configured to execute any one of the methods for configuring the TCI state provided by embodiments of the present disclosure.

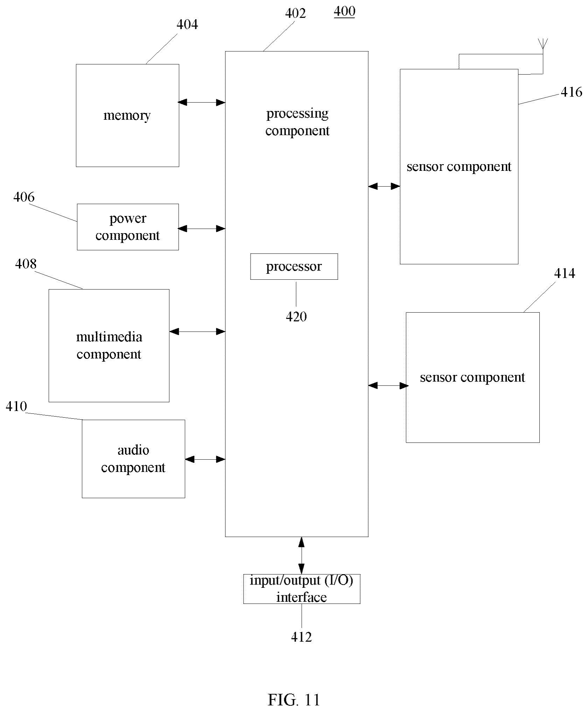

FIG. 11 is a block diagram illustrating a device for determining a TCI state according to an illustrative embodiment. For example, the device 400 may be a mobile phone, a computer, a digital broadcast terminal, a messaging device, a game console, a tablet device, a medical device, a fitness device, a personal digital assistant, or the like.

Referring to FIG. 11, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, phone calls, data communications, camera operations, and recording operations. The processing component 402 may include one or more processors 420 to execute instructions to perform all or some of the steps in the above-described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, videos, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and/or the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as keyboards, click wheels, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may further include a light sensor, such as a CMOS or CCD image sensor, for use in imaging applications. In some embodiments, the sensor component 414 may further include an accelerometer sensor, a gyroscope sensor, a magnetic sensor, a pressure sensor, or a temperature sensor.

The communication component 416 is configured to facilitate communication, wired or wireless, between the device 400 and other devices. The device 400 may access a wireless network based on a communication standard, such as Wi-Fi, 2G, or 3G, or a combination thereof. In an illustrative embodiment, the communication component 416 receives a broadcast signal or broadcast associated information from an external broadcast management system via a broadcast channel. In an illustrative embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an illustrative embodiment, there is also provided a non-transitory computer-readable storage medium including instructions, such as included in the memory 404, executable by the processor 420 in the device 400, for completing the above-mentioned methods. For example, the non-transitory computer-readable storage medium may be a ROM, a random access memory (RAM), a CD-ROM, a magnetic tape, a floppy disc, an optical data storage device, and the like.

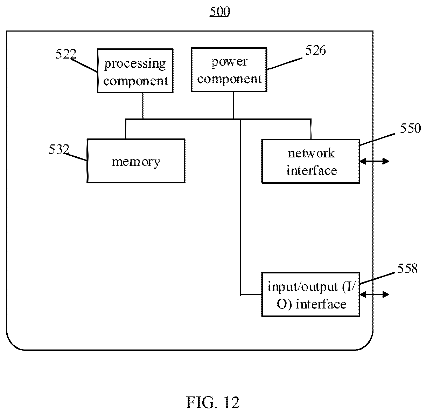

FIG. 12 is a block diagram illustrating a device 500 for configuring a TCI state according to an illustrative embodiment. For example, the device 500 may be provided as a server. Referring to FIG. 12, the device 500 includes a processing component 522 and a memory resource represented by a memory 532. The processing component 522 may further include one or more processors. The memory 532 is configured to store instructions executable by the processing component 522, such as an application program. The application program stored in the memory 532 may include one or more modules each corresponding to a set of instructions. In addition, the processing component 522 is configured to execute the instructions to perform the methods for configuring the TCI state.

The device 500 further includes a power component 526 configured to perform power management on the device 500, a wired or wireless network interface 550 configured to connect the device 500 to the network, and an input/output (I/O) interface 558. The device 500 may operate an operating system stored in the memory 532, such as Windows ServerTM, Mac OS XTM, UnixTM, LinuxTM, Free BSDTM, or the like.

It is further understood that "a plurality" in this disclosure refers to two or more, and other quantifiers are similar thereto. "And/or", which describes an associated relationship of associated objects, means that there may be three relationships, for example, A and/or B, which may mean that A exists alone, A and B exist at the same time, and B exists alone. A character "/" generally indicates that contextual objects are in an "or" relationship. "A/an" and "the" in singular forms are intended to include plural forms, unless clearly indicated in the context otherwise.

It is further understood that the meaning of terms such as "in response to", "if", and the like involved in the present disclosure will depend on the context and the actual use scenario. As used herein, the term "in response to" may be construed to mean "when" or "upon" or "if" or "in a case where" depending on the context.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present disclosure.

It is further understood that although operations are described in a specific order in the accompanying drawings in the embodiments of the present disclosure, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for determining a transmission configuration indication (TCI) state, performed by a terminal, comprising:
obtaining first indication information, wherein the first indication information is used to determine a first TCI state, and the first TCI state comprises N sets of unified TCI states, where N is a positive integer greater than 1; and
obtaining second indication information, wherein the second indication information is used to determine a second TCI state corresponding to a physical shared channel of the terminal, and the second TCI state comprises one or more sets of unified TCI states in the N sets of unified TCI states;
wherein the physical shared channel comprises a physical uplink shared channel and/or a physical downlink shared channel, a physical downlink control channel of the terminal is configured to communicate according to a single frequency network (SFN) scheme, and the first indication information and the second indication information are received via the physical downlink control channel.

2. The method of claim 1, wherein the physical shared channel is configured to communicate according to a non-SFN scheme;
the SFN scheme configured for the physical downlink control channel is a first SFN scheme SFNschemeA, and/or the SFN scheme configured for the physical downlink control channel is a second SFN scheme SFNschemeB; and
the second indication information indicates one or more sets of unified TCI states in the N sets of unified TCI states as the second TCI state.

3. The method of claim 1, wherein the second indication information indicates a plurality of sets of unified TCI states in the N sets of unified TCI states as the second TCI state.

4. The method of claim 3, wherein the physical shared channel is configured with a same SFN scheme as the physical downlink control channel.

5. The method of claim 3 or 4, wherein the SFN scheme configured for the physical downlink control channel is a first SFN scheme (SFNschemeA) or a second SFN scheme SFNschemeB.

6. The method of claim 1, wherein the first indication information received comprises information received in L receptions, and information received in the i^{th} reception indicates Kᵢ sets of unified TCI states, where L is a positive integer, and i is a positive integer less than or equal to L;
the N sets of unified TCI states are determined according to the Kᵢ sets of unified TCI states; or
the N sets of unified TCI states are determined according to the Kᵢ sets of unified TCI states and Kⱼ sets of unified TCI states, where j is a positive integer less than or equal to L, and i is not equal to j.

7. The method of claim 6, wherein determining the N sets of unified TCI states according to the Kᵢ sets of unified TCI states comprises:
determining the Kᵢ sets of unified TCI states according to the information received in the L^{th} reception, wherein i=L, and the information received in the L^{th} reception is information received most recently.

8. The method of claim 7, wherein determining the N sets of unified TCI states according to the Kᵢ sets of unified TCI states and the Kⱼ sets of unified TCI states comprises:
determining the Kᵢ sets of unified TCI states according to the information received in the L^{th} reception, where i=L; and
determining the Kⱼ sets of unified TCI states according to information received in the j^{th} reception, wherein j is less than i, and at least one set of unified TCI state in the Kⱼ sets of unified TCI states is not updated by the information received in the L^{th} reception.

9. The method of any one of claims 2 to 4 or 6, further comprising:
sending capability information before obtaining the first indication information;
wherein the capability information indicates that the terminal supports that only the physical downlink control channel is configured to communicate according to the SFN scheme; or
the capability information indicates that the terminal does not support that only the physical downlink control channel is configured to communicate according to the SFN scheme.

10. The method of claim 1, wherein at least one control resource set (CORESET) of the terminal is configured to be associated with a plurality of sets of unified TCI states in the N sets of unified TCI states.

11. The method of claim 7, wherein the first indication information is carried in a media access control-control element (MAC CE), and/or carried in downlink control information (DCI).

12. The method of claim 11, wherein the first indication information is carried in the MAC CE, the MAC CE is used to activate K sets of unified TCI states, and the K sets of unified TCI states correspond to a first code point of a TCI indication field of the DCI.

13. The method of claim 11, wherein the first indication information is carried in the MAC CE and the DCI, the MAC CE is used to activate a plurality of code points of a TCI state field of the DCI to be in a one-to-one correspondence with K sets of unified TCI states, and the TCI state field of the DCI indicates one code point among the plurality of code points.

14. The method of claim 13, wherein each of at least one code point in the plurality of code points corresponds to a plurality of sets of unified TCI states.

15. The method of claim 1, wherein there are one or more physical shared channels.

16. The method of claim 1, wherein the N sets of unified TCI states correspond to a plurality of transmission and reception points.

17. A method for configuring a transmission configuration indication (TCI) state, performed by a network device, comprising:
sending first indication information, wherein the first indication information is used to configure a first TCI state, and the first TCI state comprises N sets of unified TCI states, where N is a positive integer greater than 1; and
sending second indication information, wherein the second indication information is used to configure a second TCI state corresponding to a physical shared channel of a terminal, and the second TCI state comprises one or more sets of unified TCI states in the N sets of unified TCI states;
wherein the physical shared channel comprises a physical uplink shared channel and/or a physical downlink shared channel, a physical downlink control channel of the terminal is configured to communicate according to a single frequency network (SFN) scheme, and the first indication information and the second indication information are received via the physical downlink control channel.

18. The method of claim 17, wherein the physical shared channel is configured to communicate according to a non-SFN scheme;
the SFN scheme configured for the physical downlink control channel is a first SFN scheme SFNschemeA, and/or the SFN scheme configured for the physical downlink control channel is a second SFN scheme SFNschemeB; and
the second indication information indicates one or more sets of unified TCI states in the N sets of unified TCI states as the second TCI state.

19. The method of claim 17, wherein the second indication information is used to configure a plurality of sets of unified TCI states in the N sets of unified TCI states as the second TCI state.

20. The method of claim 19, wherein the physical shared channel is configured with a same SFN scheme as the physical downlink control channel.

21. The method of claim 19 or 20, wherein the SFN scheme configured for the physical downlink control channel is a first SFN scheme SFNschemeA or a second SFN scheme SFNschemeB.

22. The method of claim 17, wherein the first indication information sent comprises information sent in L sendings, information sent in the i^{th} sending indicate Kᵢ sets of unified TCI states, where L is a positive integer, and i is a positive integer less than or equal to L;
the N sets of unified TCI states are determined according to the Kᵢ sets of unified TCI states; or
the N sets of unified TCI states are determined according to the Kᵢ sets of unified TCI states and Kⱼ sets of unified TCI states, where j is a positive integer less than or equal to L, and i is not equal to j.

23. The method of claim 22, wherein determining the N sets of unified TCI states according to the Kᵢ sets of unified TCI states comprises:
determining the Kᵢ sets of unified TCI states according to the information sent in the L^{th} sending, wherein i=L, and the information sent in the L^{th} reception is information sent most recently.

24. The method of claim 22, wherein determining the N sets of unified TCI states according to the Kᵢ sets of unified TCI states and the Kⱼ sets of unified TCI states comprises:
determining the Kᵢ sets of unified TCI states according to the information sent in the L^{th} sending, where i=L; and
determining the Kⱼ sets of unified TCI states according to information sent in the j^{th} sending, wherein at least one set of unified TCI state in the Kⱼ sets of unified TCI states is not updated by the information sent in the L^{th} sending.

25. The method of any one of claims 18 to 20 or 22, further comprising:
receiving capability information before sending the first indication information;
wherein the capability information indicates that the terminal supports that only the physical downlink control channel is configured to communicate according to the SFN scheme; or
the capability information indicates that the terminal does not support that only the physical downlink control channel is configured to communicate according to the SFN scheme.

26. The method of claim 17, wherein at least one control resource set (CORESET) of the terminal is configured to be associated with a plurality of sets of unified TCI states in the N sets of unified TCI states.

27. The method of claim 22, wherein the first indication information is carried in a media access control-control element (MAC CE), and/or carried in downlink control information (DCI).

28. The method of claim 27, wherein the first indication information is carried in the MAC CE, the MAC CE is used to activate K sets of unified TCI states, and the K sets of unified TCI states correspond to a first code point of a TCI indication field of the DCI.

29. The method of claim 27, wherein the first indication information is carried in the MAC CE and the DCI, the MAC CE is used to activate a plurality of code points of a TCI state field of the DCI to be in a one-to-one correspondence with K sets of unified TCI states, and the TCI state field of the DCI indicates one code point among the plurality of code points.

30. The method of claim 29, wherein each of at least one code point in the plurality of code points corresponds to a plurality of sets of unified TCI states.

31. The method of claim 17, wherein there are one or more physical shared channels.

32. The method of claim 17, wherein the N sets of unified TCI states correspond to a plurality of transmission and reception points.

33. An apparatus for determining a transmission configuration indication (TCI) state, comprising:
a receiving unit, configured to obtain first indication information, wherein the first indication information is used to determine a first TCI state, and the first TCI state comprises N sets of unified TCI states, where N is a positive integer greater than 1; and obtain second indication information, wherein the second indication information is used to determine a second TCI state corresponding to a physical shared channel of the terminal, and the second TCI state comprises one or more sets of unified TCI states in the N sets of unified TCI states;
wherein the physical shared channel comprises a physical uplink shared channel and/or a physical downlink shared channel, a physical downlink control channel of the terminal is configured to communicate according to a single frequency network (SFN) scheme, and the first indication information and the second indication information are received via the physical downlink control channel.

34. An apparatus for configuring a transmission configuration indication (TCI) state, comprising:
a sending unit, configured to send first indication information, wherein the first indication information is used to configure a first TCI state, and the first TCI state comprises N sets of unified TCI states, where N is a positive integer greater than 1; and send second indication information, wherein the second indication information is used to configure a second TCI state corresponding to a physical shared channel of a terminal, and the second TCI state comprises one or more sets of unified TCI states in the N sets of unified TCI states;
wherein the physical shared channel comprises a physical uplink shared channel and/or a physical downlink shared channel, a physical downlink control channel of the terminal is configured to communicate according to a single frequency network (SFN) scheme, and the first indication information and the second indication information are received via the physical downlink control channel.

35. A communication system, comprising a terminal and a network device, wherein
the terminal is configured to perform the method of any one of claims 1 to 16; and
the network device is configured to perform the method of any one of claims 17 to 32.

36. A device for determining a transmission configuration indication (TCI) state, comprising:
a processor; and
a memory for storing processor-executable instructions;
wherein the processor is configured to perform the method of any one of claims 1 to 16.

37. A device for configuring a transmission configuration indication (TCI) state, comprising:
a processor; and
a memory for storing processor-executable instructions;
wherein the processor is configured to perform the method of any one of claims 17 to 32.

38. A storage medium having stored therein instructions that, when executed by a processor of a terminal, cause the terminal to perform the method of any one of claims 1 to 16.

39. A storage medium having stored therein instructions that, when executed by a processor of a network device, cause the network device to perform the method of any one of claims 17 to 32.
